# EUROPEAN PATENT APPLICATION

(11) **EP 1 818 092 A1**
(43) Date of publication of application: **15.08.2007**
(21) Application number: 06075341.5
(22) Date of filing: 14.02.2006
(51) Int. Cl.: B01D 65/08, B01D 63/06, B01D 63/16, B01D 29/11, B01D 29/72

(54) **Ultrasonically actuated membrane**

(71) Applicant: Nederlandse Organisatie voor Toegepast-Natuurwetenschappelijk Onderzoek TNO, 2628 VK Delft (NL)
(72) Inventor: Dortmans, Leonardus J.M.G., 6716 SL Ede (NL); Breeuwer, René, 2623 HP Delft (NL)
(74) Representative: Winckels, Johannes Hubertus F.

(57) **Abstract**

A filter apparatus (1) comprising a product inlet (6); a filtrate outlet and a porous stiff filter structure (4). The filter structure separates the product inlet from the filtrate outlet. An ultrasonic actuator (9) is provided that is directly mechanically coupled to the porous stiff filter structure. The actuator is arranged for imparting in-plane vibrational waves to the porous stiff filter structure. Accordingly an enhanced filtration can be provided.

## Description

The invention relates to a filter apparatus comprising a hollow filter tube, connected to a product inlet and a retentate outlet for crossflow application purposes and an ultrasonic actuator.

Filtration is commonly used, for instance in dairy plants for filtering milk. One of the problems that is encountered is, that residue is likely to hinder the throughput through the membrane because of clogging etc. To this end a number of techniques is commonly used such as so called crossflow filtration, wherein the product to be filtered is led with relatively high speed alongside a filter wall. In the transverse direction, hence in cross flow, filtration occurs by filtrate leaking through the filter wall. In dairy plants a common filter application is a tube filter, often of a ceramic or ceramic-based material, wherein milk is circulated in cross flow. Often the porous ceramic often forms a carrier for a micro porous filter film. Such applications are also referenced as composite filters, that is, an actual filter membrane such as a micro porous filter film coupled to a rigid filter support material.

Accordingly, the tube comprises a product inlet and a retentate outlet. The filtrate entering through the filter tube wall is caught in a receptacle and output via a filtrate outlet.

In the prior art, ultrasonic stimulation of the product to be filtered is suggested to enhance the throughput of filtrate through the membrane, which is generally seen as a way of keeping small particles in flux that would otherwise clog the membrane pores. It is desirable to improve the known stimulation techniques, in particular, in providing an enhanced vibratory stimulation technique that improves the throughput of the filter and prevents clogging thereof.

In one aspect, the invention provides a filter apparatus designed according to the features of claim 1. In particular, the invention provides an actuator that is directly mechanically coupled to the porous stiff filter or filter-support structure. Non limiting to the invention it is thought that this kind of coupling can directly transfer acoustic energy to the perimeter of pore openings, thereby improving the prevention of clogging of particles that are carried away by the flow. Especially with membrane or membrane-support material of high stiffness properties the acoustic energy transfer losses are low so that the filter function is improved considerably.

WO94/21361 discusses providing acoustic energy to a liquid to be filtered. The filter apparatus that is disclosed comprises inner filter elements and an outer housing, the intermediate room between the housing and the filter elements is used for crossflow circulation of the product. Piezo elements are coupled to the housing, developing acoustic standing waves in the product.

The invention will be further elucidated with reference to the drawing.
In the figures:
Figure 1 provides a schematic side view of a first embodiment according to the invention;
Figure 2 provides an alternative actuator for actuating a filter tube such as illustrated in Figure 1; and
Figure 3 illustrates a filter comprising a plurality of filter tubes.

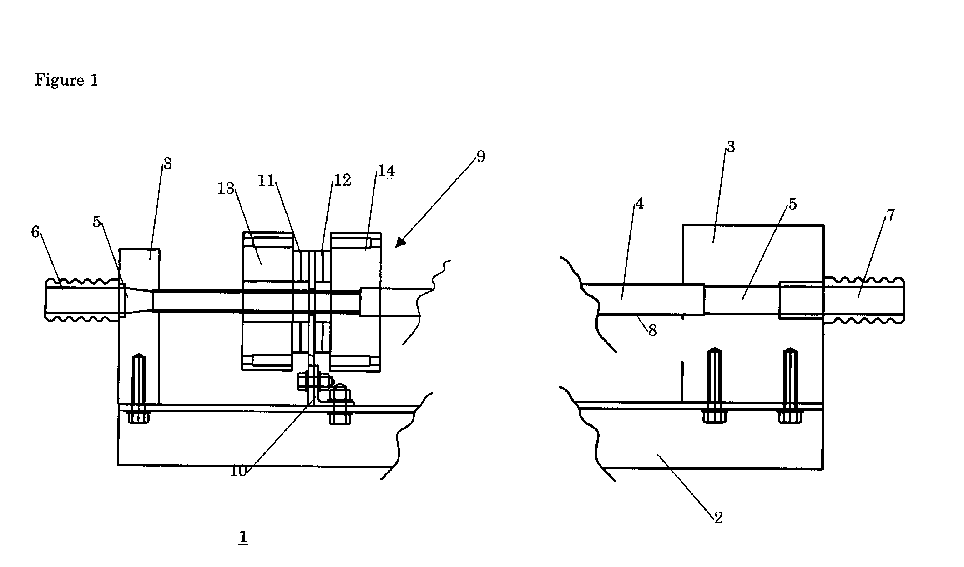

In the remainder, identical or like parts will be referenced by the same reference numerals. Turning to Figure 1, a basic setup for a filter apparatus 1 is shown which is used for test purposes. The setup 1 comprises a frame assembly 2, onto which head pieces 3 are mounted that hold a filter tube 4. The filter tube 4 comprises connectors 5 for connecting to a product input 6 and a retentate output 7. The filter tube 4 is designed as a hollow ceramic tube. Through the tube 4, milk or another product to be filtered is cycled in crossflow filtering mode. Thus, filtrate will be leaking out of the wall 8 of the filter tube 4, which can be caught in a receptacle (not shown).

According to the invention, the filter tube is actuated by direct mechanical coupling to an actuator 9. In particular, the actuator 9 is mounted on the frame assembly 2 via mounts 10 for imparting in-plane vibrational waves to the porous stiff hollow filter tube 4. To this end, the actuator 9 comprises a two pairs of piezo rings 11a/b, and 12a/b coupled together for providing axial vibrations to the filter tube 4. The rings 11, 12 are thereto coupled to intermediate metal masses 13, 14, that provide amplitude to the piezo vibrations. The masses comprise bore holes that provide room for connection with the filter tubes or a connection tube to connect to the filter tubes. The length of the masses 13, 14 is chosen such (through experiment and/or calculation) that the entire assembly, including the basic transducer consisting of the piezo rings 11 and 12 and the end masses 13 resonates efficiently -in the desired mode. To achieve this, the resonant frequency of the basic transducer used is approximately equal to the desired modal frequency of the tube. At this frequency, the center of the basic transducer is at a vibration node. At this point, the transducer is supported by a thin metal plate. The filter tube is coupled to the front mass 13 at such a point along the length that efficient resonant excitation is obtained. The opposite end of the filter tube is preferably terminated in such a way that efficient resonance is obtained. This can be achieved by the solid terminator block 3 on the right side. Further, the fluid inlet into the filter tube is from another solid terminator block 3 on the left side via a short section of tubing (not numbered) to the driving point of the filter tube 4. This short section of tubing is preferably resonant at the operating frequency of the entire assembly. In this embodiment it is supported only at its end points, which means that, for efficient resonance of the filter tube, its length is preferably close to an integer number of half wavelengths.

The rings 11 and 12 are each constructed by stacking two oppositely poled individual piezo disks with a thin metal shim in between. The alternating excitation voltage is applied between the metal frame of the equipment and the shims. The purpose of this arrangement, compared to the use of single rings, is to obviate the need for electrical insulation between the "hot" power terminal as well as to lower the electrical impedance of the actuator.

In one test setup, a filter tube of 680 mm was submitted to about 25 Watt of power transfer in resonance frequency of 18 kHz. Above 45 Watts the structural integrity of the hollow tube may be compromised. The piezo actuator 9 was arranged axially symmetric and targeted at a such a distance along the filter tube 4 that efficient resonance was obtained. This may be relatively close, but not equal to a vibration minimum. The actuator 9 was tuned to provide in-plane axial waves at the targeted resonance frequency, which can be done by modifying the length of the front and rear masses 13. In this example, the actuator 9 was mounted axially and rotationally symmetric. Such a design may promote axial waves that propagate in-plane of the filter tube wall 8.

In another example, another actuator can be provided by mounting and/or driving piezo elements asymmetrically on tangentially opposing sides of the filter tube 4, creating torsion about their center line. Such a design may promote bending waves.

In a third example, another actuator can be provided by mounting and/or driving piezo elements to create torsion about the axis of filter tube 4. Such a design may promote a torsional resonance in the filter tube 4. alternating mode.

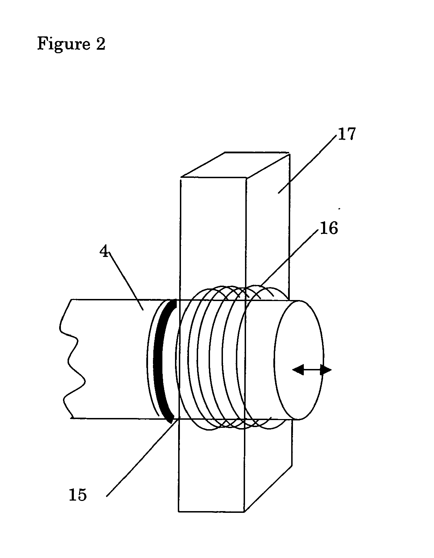

Figure 2 shows an alternative embodiment for imparting vibrational energy to a filter structure 4, in particular an embodiment where a magnetostrictive material 15 is used in the filter tube. This material may be provided as a separate annular coupling piece 15 axially extending the tube (as shown) or dividing the tube. The magnetostrictive material is subjected to a varying magnetic field provided by an electromagnetic coil 16 integrated in a static wall member 17, causing mechanical deformations of the magnetostrictive material 15. To enhance the effect, a permanent magnet or permanent magnets may be arranged in close proximity of the magnetostrictive material 15. Through direct physical vibrations that are transferred to the filter tube 4 radial, axial, bending wave modes or torsion wave modes can be provided depending on the design, possible magnetic biasing -and driving modes. The static wall 17 can form an end wall connecting the filter tube 4 to an inlet or outlet (not shown), or may be provided on an intermediate position alongside a length of the filter tube 4.

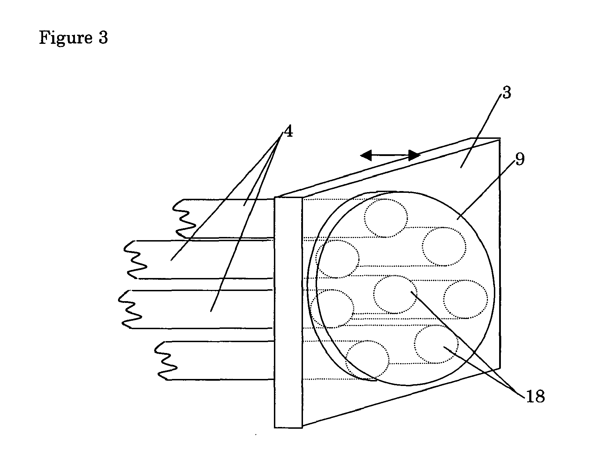

Figure 3 shows another embodiment according to the invention, where the actuator 9 is formed by a head piece 3. The presence of such a head piece is conventional in a filter apparatus for filtering milk, wherein a plurality of filter tubes 4 is coupled in parallel to enlarge the effective filter area. The filter tubes 4 are coupled between head pieces, providing a coupling between the product inlet, respective retentate outlet of the milk flow. According to this embodiment, at least one head piece 3 or a part thereof is it provided with an ultrasonic actuator for imparting vibrational energy to the mounted filter tubes 4. Such an ultrasonic actuator may be a piezo actuator that is connected to the head piece 3. In the illustrated embodiments, in dotted lines, the end parts 18 of the filter tubes 4 are illustrated abutting the head piece 3 on the rear side of the head piece 3. On the front side of the head piece, in the view illustrated in Figure 3, a piezo actuator 9 is coupled. The actuator may be perforated to provide through holes for connecting the tubes 3 to inlets (not shown). Otherwise, the actuator may be provided around each single tube 4.

In this application, the term "ultrasonic" refers to the part of the audio spectrum that is hard or impossible to hear for human perception, ranging from about 18 kHz to about 40 kHz. In this part of the spectrum, amplitudes are relatively large, whereas in the higher parts of the spectrum the amplitude may be to too small to provide adequate vibration amplitude.

The term "direct mechanical coupling" refers to a coupling wherein vibrational energy is directly transferred from the actuator to the filter structure by a physical coupling transferring mechanical vibrations to the filter structure. Accordingly an intermediate coupling element may be present or absent between the actuator and the filter structure, in particular, between the active parts of the actuator and the filter structure.

Although the invention has been described with reference to the illustrated embodiments it is not limited thereto but may comprise variations and modifications without departing from the scope of the claims as defined hereinafter. Such modifications may comprise other type of actuators than the piezo or magnetostrictive shown here above. Also, other type of filters may be used, for instance, sheet filters. Also, actuators that are integral to the filter material, such as piezo fibers that are integrated in the filter material are considered falling within the scope of the invention.

## Claims

1. A filter apparatus comprising:
- a hollow filter tube, connected to a product inlet and a retentate outlet for crossflow application purposes; and
- an ultrasonic actuator;
- wherein said actuator is directly mechanically coupled to said porous stiff filter or composite filter structure.

2. A filter apparatus according to claim 1, wherein the actuator is arranged for imparting axial vibrational waves to said porous stiff filter structure.

3. A filter apparatus according to claim 2, wherein said actuator comprises an annular piezo element at co-axial with said filter tube.

4. A filter apparatus according to claim 3, wherein said piezo element comprises a pair of piezo annular rings or plates, coupled and enclosed by oppositely arranged metal masses axially arranged to said filter tube for obtaining resonance at the desired frequency and transferring the vibrational energy of said piezo elements to said filter tube.

5. A filter apparatus according to claim 1, further comprising a head piece for holding at least one of said filter tubes; said actuator coupled to said head piece.

6. A filter apparatus according to claim 1, wherein said head piece comprises a electromagnetic coil enclosing said filter tube, wherein said filter tube comprises a magnetostrictive element.

7. A filter apparatus according to claim 1, wherein a permanent magnet is arranged in close proximity of the magnetostrictive element.

8. A filter apparatus according to claim 1, wherein said filter tube comprises a multitude of small piezo-active elements.

9. A filter apparatus according to claim 8, wherein said piezo-active elements comprise piezo-active fibres.

10. A filter apparatus wherein said filter structure comprises a porous ceramic element and is designed to resonate ultrasonically.

11. A filter apparatus according to any of the preceding claims, wherein the ultrasonic stimulation ranges from 18 to 100 kHz.

12. A filter apparatus according to any of the preceding claims, wherein the ultrasonic stimulation provides axial waves, torsion waves, radial waves or bending waves, or a combination thereof.
